# EUROPÄISCHE PATENTSCHRIFT

(11) **EP 0 394 509 B1**
(45) Veröffentlichungstag und Bekanntmachung des Hinweises auf die Patenterteilung: **22.06.1994**
(21) Anmeldenummer: 89107388.4
(22) Anmeldetag: 24.04.1989
(51) Int. Cl.: H02H 3/33

(54) **Differenzstromschutzschalter und Verfahren zum Einstellen der Auslösebereiche**
Differential current circuit breaker and method for adjusting the trip ranges
Disjoncteur différentiel et procédé pour ajuster des plages de déclanchement

(43) Veröffentlichungstag der Anmeldung: 31.10.1990
(73) Patentinhaber: SIEMENS AKTIENGESELLSCHAFT, 80333 München (DE)
(72) Erfinder: Harr, Dieter, Dipl.-Ing., D-8400 Regensburg (DE)

(56) Entgegenhaltungen:
- EP-A- 0 167 079
- DE-A- 1 513 571
- FR-A- 2 430 680

## Beschreibung

Die Erfindung betrifft einen Differenzstromschutzschalter, der mit einer Transduktorschaltung arbeitet, im einzelnen nach Gattungsbegriff von Patentanspruch 1. Die Sekundärwicklung ist mit einem Meßwiderstand in Serienschaltung an einen Generator für Wechselmagnetisierung, insbesondere an einen Rechteckgnerator, angeschlossen. An einem Abgriff zwischen Sekundärwicklung und Meßwiderstand ist eine Auswerteschaltung angeschlossen, die mit einer Auslöseeinrichtung in Verbindung steht, die über ein Schaltschloß auf Schaltkontakte in den zu überwachenden Leitungen einwirkt. Unter Meßwiderstand wird hier verstanden, daß an diesem ein Ergebnissignal ansteht, das in der Auswerteschaltung zum Einleiten des Auslösevorgangs verarbeitet werden kann. Derartige Differenzstromschutzschalter sind bekannt (EP-A1-0 167 079).

Differenzstromschutzschalter werden eingesetzt, um auf Fehlerströme aus glattem Gleichstrom, aus pulsierendem Wechselstrom, also mit Gleichstromanteilen, und aus Wechselstrom anzusprechen.

Kernmaterial für den Summenstromwandler hat bei rechteckiger Hystereseschleife herstellerseitig garantierte relativ enge Toleranzen bei der Sättigungs- und bei der Remanenzinduktion sowie der Koerzitivfeldstärke. Anhand dieser Daten läßt sich die Auslösefunktion für glatten Gleichstrom verhältnismäßig leicht abgleichen. Für die Auslösung bei Wechsel- und Pulsströmen ist aber auch der Induktionshub des Eisenkerns von wesentlicher Bedeutung. Dieser wird herstellerseitig in der Regel nicht definiert und auch nicht in Toleranzen garantiert.

Hier treten in der Praxis verhältnismäßig große Streuungen von Kern zu Kern auf. Die Auslösewerte eines Differenzstromschutzschalters sind bei Wechsel- und Pulsstrom in der Praxis nur schwer und durch mehrere Maßnahmen abzugleichen. Es sind also meist mehrere Abgleichmittel für einen Differenzstromschutzschalter vorzusehen.

Der Erfindung liegt die Aufgabe zugrunde, einen Differenzstromschutzschalter der eingangs geschilderten Art so zu verbessern, daß er verhältnismäßig leicht und im Grundsatz durch ein einziges Abstimmittel auf den gewünschten Ansprechbereich innerhalb einer Typenreihe eingestellt werden kann.

Die Lösung der geschilderten Aufgabe besteht nach der Erfindung darin, daß der Generator Mittel zum Einstellen der Frequenz in einem größeren Frequenzbereich aufweist als es für den Toleranzausgleich beim Generator selbst zum Einstellen der Generatorfrequenz erforderlich ist. Ein derartiger Differenzstromschutzschalter ermöglicht es, innerhalb einer Typenreihe durch abgleichendes Einstellen der Generatorfrequenz den gewünschten Auslösebereich einzustellen. Dadurch wird das Spannungsverhältnis der Spannung am induktiven Widerstand der Sekundärspule zur Spannung am Meßwiderstand wieder so eingestellt, wie es für die Leittype ermittelt wurde. Die Auslösewerte für die verschiedenen Fehlerstromarten können also in gewohnter Weise eingestellt werden und in einer Typenreihe können die einzelnen Differenzstromschutzschalter lediglich durch Abstimmen der Generatorfrequenz auf das Auslöseverhalten der Leittype eingestellt werden. Verständlicherweise können zusätzlich auch bisher übliche Einstellmittel verwendet werden, sie sind jedoch nicht erforderlich.

Wenn der Generator mit einem RC-Glied versehen ist, kann ein abgleichbarer Widerstand und bzw. oder ein abgleichbarer Kondensator als Mittel zum Einstellen der Frequenz vorgesehen sein.

Ein erfindungsgemäßes Verfahren zum Einstellen der Auslösebereiche eines Differenzstromschutzschalters der geschilderten Art besteht darin, daß innerhalb einer Typenreihe der Auslösebereich über die Generatorfrequenz eingestellt wird.

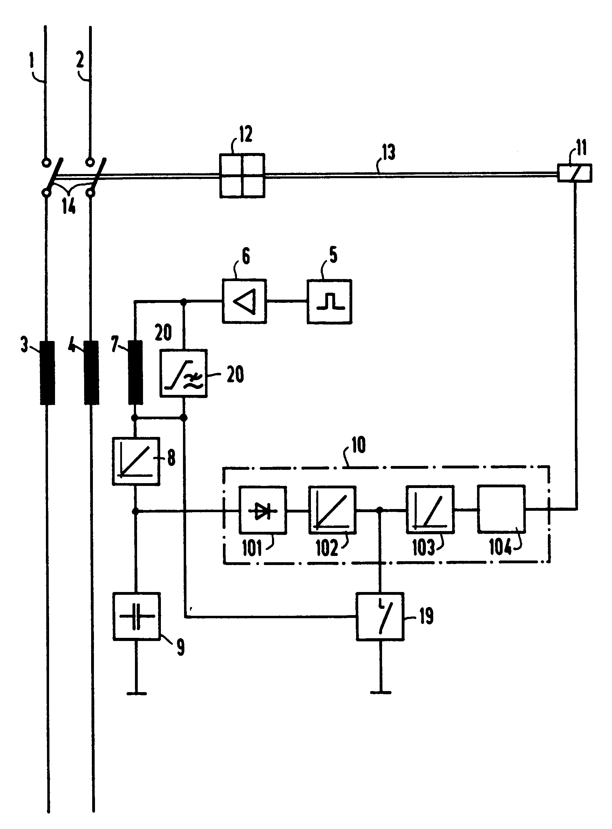

Die Erfindung soll nun anhand eines in der Zeichnung grob schematisch wiedergegebenen Ausführungsbeispiels näher erläutert werden:

Der Differenzstromschutzschalter nach der Zeichnung überwacht einen Außenleiter 1 bzw. Phasenleiter und einen Mittelleiter 2 bzw. Neutralleiter. Die Primärwicklungen 3 und 4 des Summenstromwandlers können einfach Durchführungen bzw. eine Windung der zu überwachenden Leiter sein. Die vom Generator 5 über einen Verstärker 6 der Sekundärwicklung 7 des Summenstromwandlers zugeführte Spannung führt zu einer Wechselmagnetisierung des Kerns des Summenstromwandlers. Der Summenstromwandler ist also dadurch vormagnetisiert. Im Ausführungsbeispiel ist der Sekundärwicklung 7 ein Integrier- und Dämpfungsglied 8 und ein kapazitiver Meßwiderstand 9 nachgeschaltet. Am Meßwiderstand 9 wird das Nutzsignal abgegriffen. Zugleich dient der kapazitive Meßwiderstand zur Potentialtrennung für die zum Bezugspotential der Elektronik symmetrische Wechselmagnetisierungsspannung. Elektronische Bauteile wie der Generator 5 und die Auswerteschaltung 10 werden durch ein oder mehrere Netzteile mit Bordnetzspannung versorgt.

Die Auswerteschaltung 10 weist im Ausführungsbeispiel einen Doppelweggleichrichter 101, ein Integrierglied 102 und einen Schwellwertschalter 103 auf. Der Schwellwertschalter 103 arbeitet auf ein Schaltglied 104. Das Schaltglied 104 arbeitet auf eine Auslösevorrichtung 11, die ein Schaltschloß 12 über eine Wirkverbindung 13 auslöst, das Schaltkontakte 14 in den zu überwachenden Leitern 1 und 2 öffnet.

Ein Koppelschalter 19 wirkt als Sensor und Sperre; er ist zwischen Sekundärwicklung 7 und Integrier- und Dämpfungsglied 8 angeschlossen und wirkt vor dem Schwellwertschalter 103 und nach dem Integrierglied 102 auf die Auswerteschaltung 10 ein. Der Koppelschalter 19, der im einzelnen in EP-A1-0 273 255 beschrieben ist, sperrt das Ansprechen des Differenzstromschutzschalters, wenn Stoßströme bzw. Stoßspannungen einwirken, auf die der Koppelschalter 19 anspricht.

Der Summenstromwandler wird durch die sekundärseitig angelegte hochfrequente Wechselspannung vom Generator 5 bis nahe an die Sättigungsgrenze wechselmagnetisiert. Wenn durch die Primärwicklung ein Strom fließt, wird in der Sekundärwicklung ein Strom induziert, der dort dem Wechselmagnetisierungsstrom überlagert wird. Dadurch kann die Sättigungsgrenze überschritten werden und der induktive Widerstand der Sekundärwicklung kleiner werden. In diesem Fall wird die Spannung in der Sekundärwicklung kleiner und die Spannungsamplitude am Meßwiderstand 9 größer. In der Auswerteschaltung 10 wird die Spannung am Meßwiderstand 9 mit einer zuvor eingestellten Schwellspannung verglichen und bei Überschreiten der Schwellspannung die Auslöseeinrichtung aktiviert, die dann die zu überwachenden Leitungen unterbricht.

Ein Filterelement 20 ist im Ausführungsbeispiel zur Sekundärwicklung parallelgeschaltet und vorzugsweise als Tiefpaßfilter ausgeführt. Es hält dann sekundäre Signale mit tiefen Frequenzen vom Koppelschalter 19 fern, so daß der Differenzstromschutzschalter bei tiefen Frequenzen sofort auslösen kann. Bei Stoßströmen mit hohen Frequenzen, die üblicherweise zu Fehlauslösungen führen, wird die Auswerteschaltung 10 dagegen gesperrt.

Wenn das Auslöseverhalten des Differenzstromschutzschalters anhand eines Leittyps festgelegt ist, können die Differenzstromschutzschalter innerhalb einer Typenreihe dadurch auf den Auslösebereich eingestellt werden, daß die Generatorfrequenz verändert wird, bis das gewünschte Auslöseverhalten eintritt. Es ist zwar bekannt, die Toleranz des Generators anhand von Einstellmitteln abzustimmen, hierfür genügt in der Regel jedoch eine Frequenzänderung von ± 10 %. Der Differenzstromschutzschalter nach der Erfindung weist dagegen einen Generator auf, dessen Mittel zum Einstellen der Frequenz es erlauben, innerhalb eines größeren Frequenzbereichs, beispielsweise von ± 25 % oder mehr, die Frequenz einzustellen, um nicht die Toleranz des Generators, sondern um die erhebliche Toleranz des Kernmaterials von Summenstromwandlern auszugleichen. Wenn der Generator ein RC-Glied aufweist, beispielsweise mit einem einstellbaren Widerstand, läßt sich an diesem Widerstand die Frequenz verändern und somit das Spannungsverhältnis der Spannung am induktiven Widerstand der Sekundärwicklung 7 zu der Spannung am kapazitiven Meßwiderstand 9 so verändern, wie es einer Leittype entspricht. Dadurch kann man die Toleranz des Kernmaterials für den Summenstromwandler, der hinsichtlich des Induktionshubs in einem Bereich von ± 150 % variieren kann, ausgleichen. Es ist also eine Kompensation an einem einzigen Widerstand möglich.

## Patentansprüche

1. Differenzstromschutzschalter, der mit einer Transduktorschaltung arbeitet, dessen Sekundärwicklung (7) mit einem Meßwiderstand (9) in Serienschaltung an einen Generator (5) für Wechselmagnetisierung, insbesondere einen Rechteckgenerator, angeschlossen ist, wobei an einem Abgriff zwischen Sekundärwicklung (7) und Meßwiderstand (9) eine Auswerteschaltung (10) angeschlossen ist, die mit einer Auslöseeinrichtung (11) in Verbindung steht, die über ein Schaltschloß (12) auf Schaltkontakte (14) in den zu überwachenden Leitungen (1, 2) einwirkt, **dadurch gekennzeichnet**, daß der Generator (5) Mittel zum Einstellen der Frequenz in einem größeren Frequenzbereich aufweist als es für den Toleranzausgleich beim Generator selbst zum Einstellen der Generatorfrequenz erforderlich ist.

2. Differenzstromschutzschalter nach Anspruch 1, **dadurch gekennzeichnet**, daß der Generator (5) ein RC-Glied und einen abgleichbaren Widerstand und bzw. oder einen abgleichbaren Kondensator aufweist.

3. Verfahren zum Einstellen der Auslösebereiche eines Differenzstromschutzschalters nach Anspruch 1, **dadurch gekennzeichnet**, daß innerhalb einer Typenreihe der Auslösebereich über die Generatorfrequenz eingestellt wird.

## Claims

1. Differential current circuit-breaker which operates with a transductor circuit, the secondary winding (7) of which is attached with a measuring impedance (9) in series connection to a generator (5) for alternating magnetization, in particular to a square-wave generator, with an evaluation circuit (10) being connected to a tap between the secondary winding (7) and the measuring impedance (9), the evaluation circuit being connected to a tripping device (11) which acts by way of a switch latch (12) on switching contacts (14) in the lines (1, 2) to be monitored, characterized in that the generator (5) has means for adjusting the frequency in a larger frequency range than is required to adjust the generator frequency for the tolerance compensation of the generator itself.

2. Differential current circuit-breaker according to claim 1, characterized in that the generator (5) has a RC element and an adjustable resistance and/or an adjustable capacitor.

3. Process for adjusting the tripping regions of a differential current circuit-breaker according to claim 1, characterized in that the tripping region is adjusted by way of the generator frequency within a standard range.

## Revendications

1. Disjoncteur différentiel, qui opère avec un circuit transducteur, dont l'enroulement secondaire (7) est relié, en étant branché en série avec une résistance de mesure (9), à un générateur (5) d'aimantation alternée, notamment à un générateur d'ondes rectangulaires, un circuit d'exploitation (10) étant relié à une prise située entre l'enroulement secondaire (7) et la résistance de mesure (9) et étant en liaison avec un dispositif de déclenchement (11) qui, par l'intermédiaire d'un verrou de commutation (12), agit sur des contacts de coupure (14) situés dans les lignes (1, 2) à contrôler, caractérisé par le fait que le générateur (5) comporte des moyens destinés à régler la fréquence dans un intervalle de fréquence plus grand que ce qui, pour compenser des tolérances dans le générateur lui-même, est nécessaire pour le réglage de la fréquence du générateur.

2. Disjoncteur différentiel suivant la revendication 1, caractérisé par le fait que le générateur (5) a un circuit RC et une résistance pouvant être équilibrée et/ou un condensateur pouvant être équilibré.

3. Procédé de réglage des intervalles de déclenchement d'un disjoncteur différentiel suivant la revendication 1, caractérisé en ce qu'on règle l'intervalle de déclenchement, dans une série de types, par l'intermédiaire de la fréquence du générateur.
